# EUROPÄISCHE PATENTSCHRIFT

(11) **EP 1 344 708 B1**
(45) Veröffentlichungstag und Bekanntmachung des Hinweises auf die Patenterteilung: **07.02.2007**
(21) Anmeldenummer: 02024231.9
(22) Anmeldetag: 31.10.2002
(51) Int. Cl.: B62D 1/19

(54) **Lenkspindel einer Lenksäule für ein Kraftfahrzeug**
Steering shaft of a steering column for a motor vehicle
Arbre de direction de colonne de direction pour un véhicule automobile

(30) Priorität: 14.03.2002 DE 10211743
(43) Veröffentlichungstag der Anmeldung: 17.09.2003
(73) Patentinhaber: ThyssenKrupp Presta AG, 9492 Eschen (LI)
(72) Erfinder: Lutz, Christian, Ing., 6714 Nüziders (AT)
(74) Vertreter: Hefel, Herbert

(56) Entgegenhaltungen:
- EP-A- 0 091 671
- DE-A- 2 459 246
- US-A- 3 508 633
- PATENT ABSTRACTS OF JAPAN vol. 008, no. 203 (M-326), 18. September 1984 (1984-09-18) & JP 59 092254 A (MITSUBISHI DENKI KK), 28. Mai 1984 (1984-05-28)

## Beschreibung

Die Erfindung betrifft eine Lenkspindel einer Lenksäule für ein Kraftfahrzeug, mit mindestens einem zur Deformation bei einem Crash vorgesehenen Abschnitt, wobei mindestens ein solcher deformierbarer Abschnitt als Wellrohr ausgebildet ist, das zumindest über einen Teil seiner Längserstreckung, der zumindest einen der Wellenberge des Wellrohres umfaßt, mindestens 2 Schichten aufweist. (zum Beispiel wie in der JP 59092254.)

Lenkspindeln von Lenksäulen mit Wellrohren als deformierbare Abschnitte sind bekannt, beispielsweise aus der DE 196 31 214 A1, EP 0 709 274 A1, EP 0 872 401 A2 und EP 0 701 070 A1. Wellrohre als im Crash-Fall deformierbare Abschnitte können in der Lenksäule in unterschiedlichen Abschnitten eingesetzt werden. Es kann ein einzelnes Wellrohr zum Einsatz kommen oder mehrere Wellrohre in unterschiedlichen Abschnitten der Lenkspindel können eingesetzt werden. Deformierbare Abschnitte in Form von Wellrohren können im Crash-Fall einerseits in achsialer Richtung komprimiert werden, andererseits können diese bei einer nicht achsialen Krafteinwirkung seitlich ausbiegen.

Zur Herstellung solcher Wellrohre für deformierbare Abschnitte von Lenkspindeln sind unterschiedliche Verfahren bekannt geworden. Beispielsweise sind solche Verfahren in der EP 661 117 A1, der EP 298 832 B1, der DE 2 027 638 A1 und der EP 0 782 891 A1 beschrieben. Zur Deformation bei einem Crash vorgesehene Wellrohre für Lenkspindeln müssen spezifischen Anforderungen genügen. Einerseits müssen sie im Crash-Fall weich genug sein, um ihre Verformung zu ermöglichen, wobei diese Verformung in definierter Weise erfolgen soll. Andererseits müssen sie über ihre vorgesehene Lebensdauer die beim gewöhnlichen Betrieb auftretenden Belastungen zuverlässig aufnehmen. Es werden daher an diese Teile hohe Anforderungen gestellt, die durch umfangreiche Tests sichergestellt werden sollen. In diesen Tests wird unter anderem die Stabilität gegenüber der Aufnahme von Drehmomenten vorgeschriebener Größen sowie gegenüber der Aufnahme von statischen, dynamischen und schwingenden Belastungen geprüft. Weiters wird das Verformungsverhalten getestet. Neben der Erfüllung dieser unterschiedlichen Anforderungen sollen diese Teile aus Platzgründen möglichst kleine Abmessungen aufweisen.

Um den unterschiedlichen, teils widersprüchlichen Anforderungen an Wellrohre als deformierbare Abschnitte in Lenkspindeln besser zu entsprechen, wird in der EP 0782 891 B1 ein Verfahren zur Herstellung eines solchen Wellrohres beschrieben, bei dem es zu einer Vergrößerung der Wandstärke im Bereich der Wellentäler (im Vergleich zu den Wellenbergen) kommt. Im Bereich der Wellentäler treten bei der Übertragung von Drehmomenten die größten Belastungen auf das Wellenrohr auf, da in diesem Bereich die Wandung des Wellrohres den kleinsten Abstand von der zentralen Achse aufweist.

Die DE 2 027 638 A1 lehrt weiters ein Verfahren zur Herstellung eines radial gewellten Rohres, bei dem eine gleich bleibende Wandstärke oder eine unterschiedliche Wandstärke und/oder Profilierung des Wellrohres von Welle zu Welle oder zonenweise erreicht werden kann. Es kann dadurch ein Wellrohr für einen deformierbaren Abschnitt einer Lenkspindel mit unterschiedlichen Knautschzonen bereitgestellt werden.

Aus der DE 32 24 308 C2 und der CH-PS 324 476 sind gewellte mehrschichtige Metallbalge bekannt, die als Teile von Flüssigkeits- oder Gasleitungen, insbesondere zum abgedichteten Verbinden von relativ zueinander beweglichen Teilen eingesetzt werden. Es handelt sich hier um ein von Lenksäulen für Kraftfahrzeuge weit entferntes und nicht vergleichbares technisches Gebiet, bei dem andere Probleme und Anforderungen zum Tragen kommen.

Ein Wellrohr der eingangs genannten Art ist weiters aus der DE 25 44 769 A1 bekannt. Bei einem solchen mehrschichtigen, beispielsweise zweischichtigen Aufbau des Wellrohres wird die Stabilität gegenüber einem um die Längsachse des Wellrohres wirkenden Drehmoment im Vergleich zu einem herkömmlichen einschichtigen Aufbau mit einer insgesamt gleichen Gesamtdicke der Wandstärke nicht oder nur wenig verringert, während eine Verformung bereits bei einer vergleichsweise deutlich geringeren einwirkenden Kraft ermöglicht wird. Dies führt zu gegenüber herkömmlichen Lenkspindeln deutlich verbesserten Crash-Eigenschaften bei hohen übertragbaren Drehmomenten, wobei auch der Außendurchmesser des verwendeten Wellrohres verringert werden kann.

Aufgabe der Erfindung ist es, eine Lenkspindel der eingangs genannten Art mit mindestens einem deformierbaren Abschnitt, der durch ein Wellrohr gebildet wird, bereitzustellen, wobei die gleichzeitigen Anforderungen einer ausreichenden Festigkeit gegenüber einem um die Längsachse des Wellrohres wirkenden Drehmoment und einer geeigneten Verformbarkeit im Crash-Fall noch besser als bei den bisher bekannten Einrichtungen erfüllt werden können. Erfindungsgemäß gelingt dies durch eine Lenkspindel mit den Merkmalen des Anspruchs 1.

Da die Wellenberge bei der Übertragung von um die Längsachse der Lenkspindel wirkenden Drehmomenten aufgrund ihres größeren Abstands von der zentralen Achse geringeren Spannungen ausgesetzt sind, kann dadurch ein deformierbarer Abschnitt einer Lenkspindel bereitgestellt werden, bei dem bei einer den Anforderungen entsprechenden Stabilität gegenüber der Übertragung von um die Längsachse wirkenden Drehmomenten ein nochmals verbessertes Verformungsverhalten im Crash-Fall, insbesondere eine leichtere Abbiegung bei einer nicht achsial einwirkenden Kraft ermöglicht wird.

Weitere Vorteile und Einzelheiten der Erfindung werden im folgenden anhand der in der beiliegenden Zeichnung dargestellten Ausführungsbeispiele erläutert. In der Zeichnung zeigen:
- die Fig. 1 und 2: stark schematisierte Darstellungen von möglichen Ausbildungen von Lenksäulen;
- die Fig. 3 bis 7: Längsmittelschnitte von verschiedenen Herstellungsschritten bei der Herstellung eines Wellrohres;
- Fig. 8: einen Querschnitt des Rohres von Fig. 4;
- Fig. 9: einen vergrößerten Ausschnitt von Fig. 7;
- Fig. 10: einen Längsmittelschnitt durch einen Teil der Lenkspindel, die einen deformierbaren Abschnitt in Form eines Wellrohres enthält;
- Fig. 11: eine Fig. 10 entsprechende Abbildung eines weiteren Ausführungsbeispiels der Erfindung;
- Fig. 12: eine Fig. 9 entsprechende vergrößerte Teilansicht eines Wellbalges gemäß einem weiteren Ausführungsbeispiel der Erfindung und
- die Fig. 13, 14 und 15: schematische Darstellungen von Längsmittelschnitten einer Wandung eines Rohres mit Bereichen unterschiedlicher Wandstärke.

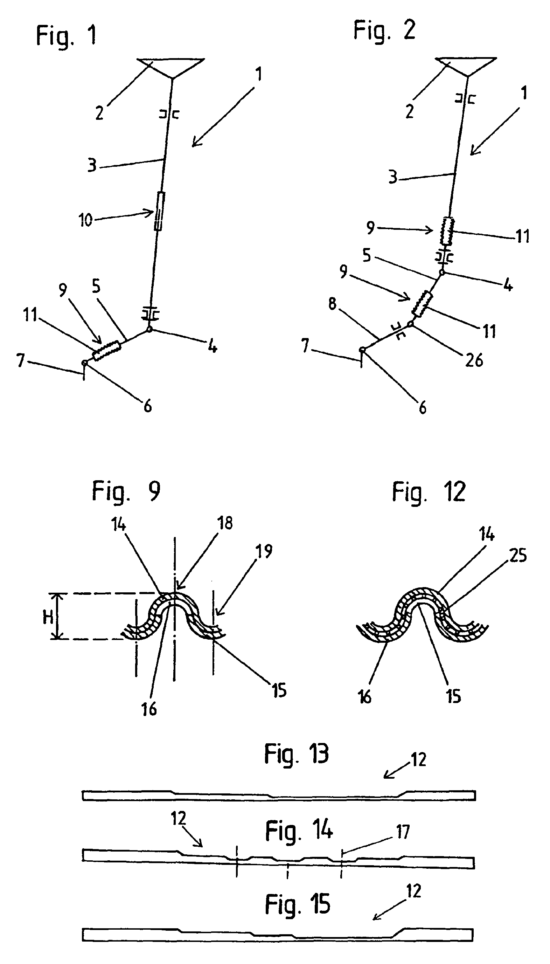

Die Fig. 1 und 2 zeigen in stark schematisierter Form zwei unterschiedliche Ausbildungen von Lenksäulen 1. Bei der in Fig. 1 dargestellten Ausführungsform schließt an das Lenkrad 2 ein erster Teil 3 der Lenkspindel an, der über eine gelenkige Verbindung 4 in Form eines Kardangelenks mit einem zweiten Teil 5 verbunden ist, welcher auch als Zwischenwelle bezeichnet wird (die evtl. einen Dämpfer enthält). Der Teil 5 steht über eine gelenkige Verbindung 6 mit einem Lenkstockzapfen 7 des Lenkgetriebes in Verbindung. Bei der Ausführungsform gemäß der Fig. 2 ist zwischen dem zweiten Teil 5 und dem Lenkstockzapfen 7 ein weiterer Teil 8 vorhanden, der mit dem Teil 5 über eine gelenkige Verbindung 26 verbunden ist. Die gelenkigen Verbindungen 6 und 26 sind ebenfalls als Kardangelenke ausgeführt. Die Lagerungen der Lenkspindel und die Aufhängung der Lenksäule am Chassis, die in bekannter Weise verstellbar ausgebildet sein kann, sind in den Fig. 1 und 2 nicht im einzelnen dargestellt und können in herkömmlicher Weise ausgebildet sein. Eine erfindungsgemäße Lenkspindel kann auch anders aufgebaut sein, beispielsweise mehr Teile 3, 5 und 8 aufweisen.

In mindestens einem der Teile 3, 5 und 8 der Lenkspindel ist ein zur Deformation bei einem Crash vorgesehener Abschnitt 9, 10 angeordnet, wobei mindestens ein solcher deformierbarer Abschnitt 9 als Wellrohr 11 ausgebildet ist. Neben in Form von Wellrohren 11 ausgebildeten deformierbaren Abschnitten 9 können auch in anderer Form ausgebildete verkürzbare Abschnitte 10 vorgesehen sein, beispielsweise in Form von teilweise ineinandergeschobenen Rohren, die im Crash-Fall achsial ineinander einschiebbar sind. Solche Ausbildungen von verkürzbaren Abschnitten sind bekannt. Es können ein oder mehrere als Wellrohr 11 ausgebildete deformierbare Abschnitte 9 vorhanden sein, die in einem oder mehreren der Teile 3, 5 und 8 der Lenkspindel angeordnet sind.

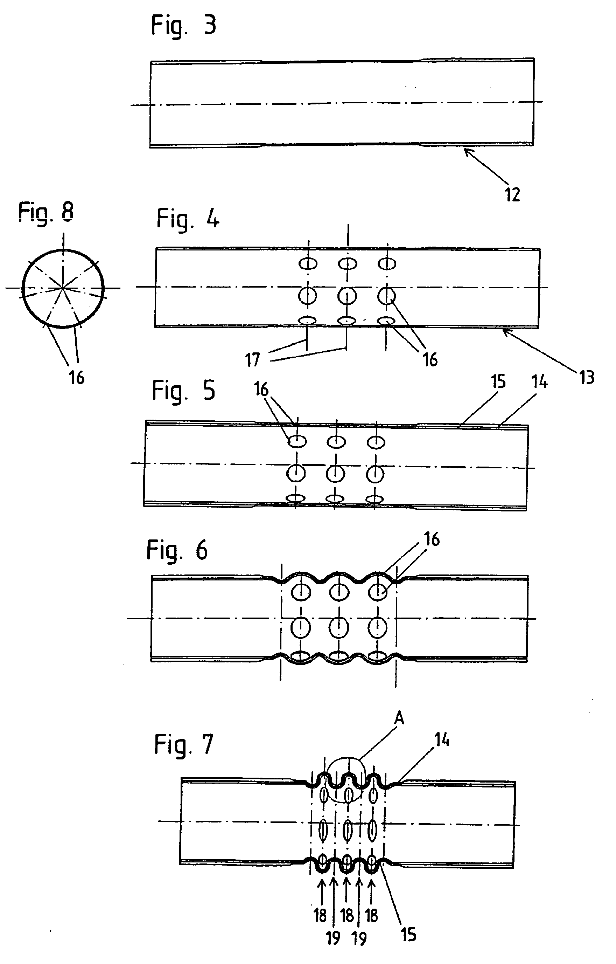

Anhand der Fig. 3 bis 9 soll im folgenden ein mögliches Herstellungsverfahren eines Ausführungsbeispiels eines Wellrohrs für eine erfindungsgemäße Lenkspindel kurz erläutert werden. Das Wellrohr ist hier über seine gesamte Länge zweischichtig ausgebildet und das zur Ausbildung der äußeren Schicht 14 verwendete Rohr 12 besitzt einen geschlossenen Mantel. Das im fertiggestellten Zustand die innere Schicht 15 bildende Rohr 13 weist eine Mehrzahl von Öffnungen 16 auf. Entlang von gedachten Umfangslinien 17, bei denen beim fertiggestellten Wellrohr die Scheitel der Wellenberge liegen sollen, ist das Rohr 13 jeweils mit mehreren in Umfangsrichtung voneinander beabstandeten Öffnungen 16 versehen, beispielsweise können entlang einer Umfangslinie 17 jeweils sieben gleichmäßig voneinander beabstandete in diesem Ausführungsbeispiel kreisrunde Öffnungen 16 angeordnet sein. Das Rohr 12 wird auf das Rohr 13 gefügt, wie dies in Fig. 5 dargestellt ist. Mittels eines Aufweitdorns kann das innere Rohr 13 in der Folge aufgeweitet werden, um die beiden Schichten 14, 15 eng aneinander anzulegen.

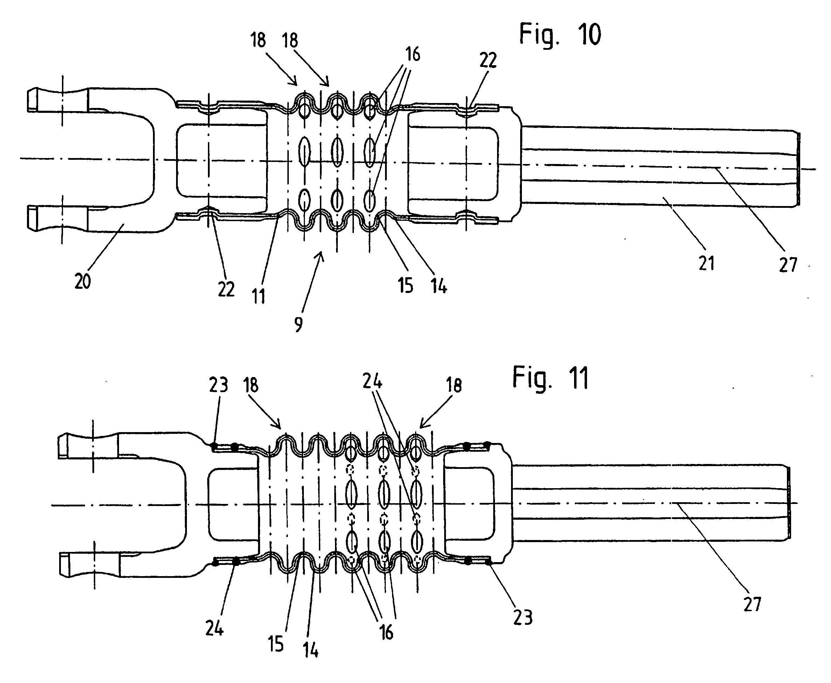

In der Folge werden die Wellungen ausgebildet, beispielsweise durch einen mehrstufigen Prozeß, wie er durch die Fig. 6 und 7 angedeutet ist. Hierbei kann beispielsweise ein Verfahren eingesetzt werden, wie dies in der in der Beschreibungseinleitung genannten EP 0782 891 B1 beschrieben ist. Hierbei wird zunächst die Rohrwandung durch von außen und innen gegen die Rohrwandung angepreßte Formwerkzeuge, welche Wellungen besitzen, mit einer Wellung versehen, wobei mehrere solche Formwerkzeuge mit einer zunehmend starken Wellung eingesetzt werden können. Weiters wird das so entsprechend Fig. 6 vorgeformte Rohr in achsialer Richtung zusammengeschoben, wobei das Rohr von innen mit einem Dorn gestützt wird und von außen Preßbacken in die einzelnen Wellentäler eingefahren werden, die in achsialer Richtung aufeinander zugeschoben werden. Bei dem so hergestellten zweischichtigen Wellrohr entsprechend Fig. 7 sind im Bereich der Wellenberge 18 in der inneren Schicht 15 eine Mehrzahl von Öffnungen 16 angeordnet. Beim gezeigten Ausführungsbeispiel sind alle Wellenberge mit mehreren in Umfangsrichtung voneinander beabstandeten Öffnungen 16 versehen. Die Wellentäler 19 sind dabei zumindest bis zu einem Viertel der Höhe H zwischen den Wellentälern 19 und den Wellenbergen 18 frei von Öffnungen 16 (vgl. Fig. 9). Durch die geschlossene äußere Schicht 14 wird beispielsweise ein Eindringen von korrosivem Salzwasser verhindert.

In der Folge kann das Wellrohr 11 in einen Teil 3, 5, 8 der Lenkspindel eingebaut werden. Beispielsweise ist in Fig. 10 einseitig eine Verbindung mit einer Gelenksgabel 20 und auf der anderen Seite eine Verbindung mit einer Welle 21 dargestellt. Bei der in Fig. 10 dargestellten Verbindung ist diese formschlüssig mittels Noppungen 22 ausgebildet, welche in entsprechende Ausnehmungen in der Gelenksgabel 20 bzw. Welle 21 eingreifen. Durch diese Noppungen 22 werden die beiden Schichten 14, 15 des Wellrohrs auch gegenüber einer gegenseitigen Verschiebung in Umfangsrichtung gesichert. Anstelle der Noppungen könnten auch andere formschlüssige Verbindungen, insbesondere Preßverbindungen, vorgesehen sein, beispielsweise Verzahnungen.

Bei dem in Fig. 11 dargestellten Ausführungsbeispiel der Erfindung ist das Wellrohr 11 mit der Gelenksgabel 20 und der Welle 21 über Verschweißungen 23 und/oder Verschweißungen 24 miteinander verbunden. Diese Verschweißungen 23 bzw. 24 können gleichzeitig eine Verbindung zwischen den beiden Schichten 14, 15 herstellen. Laser- bzw. Ultraschall-Verschweißungen 23, die beide Schichten 14, 15 durchsetzen und bis zur Gelenksgabel 20 oder Welle 21 reichen, können aus Sicherheitsgründen vorgesehen sein. Das Wellrohr 11 könnte auch einstückig mit einem anschließenden Teil der Lenkspindel ausgebildet sein.

Bei dem in Fig. 11 dargestellten Ausführungsbeispiel ist weiters nur ein Teil der Wellenberge 18 der inneren Schicht 15 mit Öffnungen 16 versehen, wobei die mit Öffnungen 16 versehenen Wellenberge 18 in einem Abschnitt der Längserstreckung des Wellrohrs liegen. Die beiden Wellenberge 18, die auf der dem benachbarten Kardangelenk 6, 26 zugewandten Seite des Wellrohres 11 liegen, sind dagegen frei von solchen Öffnungen, da in diesem Bereich beim gewöhnlichen Betrieb der Lenkspindel die größten vom benachbarten Kardangelenk herrührenden nicht achsialen Kräfte in Form von Biegebelastungen auftreten.

Beim Ausführungsbeispiel gemäß Fig. 2 sind beidseitig des näher beim Lenkstockzapfen 7 liegenden Wellrohres 11 Kardangelenke 26, 4 angeordnet. Das "benachbarte Kardangelenk" ist in einem solchen Fall dasjenige, welches dem dem jeweiligen Kardangelenk 26, 4 zugewandten Ende des Wellrohres 11 näher liegt, in Fig. 2 also das Kardangelenk 26.

Grundsätzlich wäre es auch denkbar und möglich, in der äußeren Schicht 14 ebenfalls Öffnungen im Bereich der Wellenberge 18 vorzusehen. Solche Öffnungen 24 sind in Fig. 11 durch strichlierte Linien angedeutet. Vorteilhaft ist es hierbei, wenn die Öffnungen 24 gegenüber den Öffnungen 16 so versetzt sind, daß die Öffnungen 24 von der inneren Schicht 15 zum Inneren des Wellrohres 11 hin geschlossen sind.

Denkbar und möglich wäre es auch, die Wandstärke von zumindest einem der Rohre 12, 13 vor ihrem Ineinanderschieben mit einer Änderung über die Längsausdehnung des Rohres 12, 13 zu versehen. Beispielsweise könnte entsprechend Fig. 14 jeweils im für ein Wellental 19 vorgesehenen Bereich die Wandstärke größer sein als in einem für einen Wellenberg 18 vorgesehenen Bereich, wobei die Fig. 14 die für die Wellenberge 18 vorgesehenen Stellen durch die Linien 17 angedeutet sind. Auch könnte die Wandstärke im benachbarten Kardangelenk 6, 26 zugewandten gewellten Bereich des Rohres 12 und/oder 13 größer sein als in einem vom Kardangelenk 6, 26 abgewandten Teil des gewellten Bereichs, in welchem die auf das Wellrohr 11 einwirkende Biegebelastung im gewöhnlichen Betrieb geringer ist (Fig. 13). Während beim Ausführungsbeispiel gemäß Fig. 13 sich die Wandstärke in einer Stufe verringert, sind beim Ausführungsbeispiel gemäß Fig. 15 zwei solche Stufen vorgesehen. Auch eine Kombination dieser Wandstärkenänderung könnte vorgesehen sein, also eine größere Wandstärke in den Wellentälern als in den Wellenbergen (zumindest für einen Teil der Wellung) und eine Abnahme der Wandstärke der Wellentäler und eventuell auch der Wellenberge in einer oder mehreren Stufen oder jeweils von einem vorausgehenden Wellental zum nächsten Wellental bzw. vom vorausgehenden Wellenberg zum nächsten Wellenberg.

Weiters könnte sich auch die Höhe H der Wellung ändern, wobei der Abstand des Wellentals von der Längsachse 27 des Wellrohrs von einem oder mehreren dem benachbarten Kardangelenk 6, 26 benachbarten Wellentälern größer ist als derjenige von diesem Kardangelenk 6, 26 weiter entfernt liegenden Wellentälern. Das Wellrohr wird dadurch in der Nähe des benachbarten Kardangelenks 6, 26, wo die stärksten Biegebeanspruchungen auftreten, biegesteifer, wobei die Höhe H der Wellung in diesem Bereich geringer ist.

Die Öffnungen 16 können auch eine andere als die gezeigte kreisrunde Form aufweisen. Durch die Formgebung der Öffnungen 16 kann auch das Ausknickverhalten des Wellrohres beeinflußt werden.

Auch eine Ausbildung der zwei oder mehr Schichten 14, 15 des Wellrohrs 11 aus unterschiedlichen Materialien ist denkbar und möglich. So könnte die äußere Schicht 14 als Hitzeschild wirken und zwischen der äußeren Schicht 14 und der aus einem vergleichsweise kostengünstigeren Material bestehende innere Schicht 15 ein Distanzmaterial, beispielsweise in Form eines Metallgeflechtes oder Drahtgitters 25 vorgesehen sein, wie dies in Fig. 12 schematisch dargestellt ist. Auch könnte eine zusätzliche äußere Schicht als Korrosionsschutz vorgesehen sein, z.B. eine vergleichsweise dünne Schicht aus Edelstahl. Auch alle Schichten des Wellrohres könnten aus Edelstahl (Niro bzw. Inox) bestehen.

Die mehrschichtige Ausbildung des Wellrohres könnte sich auch nur über einen Teil seiner Längserstreckung ausdehnen, beispielsweise über den gewellten Teil seiner Längserstreckung. Zumindest ist das Wellrohr über einen Teil seiner Längserstreckung, der zumindest einen der Wellenberge des Wellrohres umfaßt; mehrschichtig ausgebildet. Vorzugsweise sind die Öffnungen 16 zumindest auch oder nur in diesem mehrschichtigen Abschnitt des Wellrohrs vorgesehen. Obwohl eine zweischichtige Ausbildung als vorteilhaft angesehen wird, wäre grundsätzliche auch eine drei- oder mehrschichtige Ausbildung denkbar und möglich. Bei einer dreischichtigen Ausbildung könnten die Wandstärken der einzelnen Schichten beispielsweise im Bereich von ca. 0,4mm liegen.

Durch eine erfindungsgemäße Ausbildung kann die Lenkspindel in verbesserter Weise einerseits an die beim gewöhnlichen Betrieb auftretenden Belastungen andererseits an die je nach spezifisch vorgegebener Anwendung gestellten Erfordernisse für den Crash-Fall angepaßt werden.

### Legende zu den Hinweisziffern:

- 1: Lenksäule
- 2: Lenkrad
- 3: Teil der Lenkspindel
- 4: gelenkige Verbindung
- 5: Teil der Lenkspindel
- 6: gelenkige Verbindung
- 7: Lenkstockzapfen
- 8: Teil der Lenkspindel
- 9: deformierbarer Abschnitt
- 10: zusammenschiebbarer Abschnitt
- 11: Wellrohr
- 12: Rohr
- 13: Rohr
- 14: äußere Schicht
- 15: innere Schicht
- 16: Öffnung
- 17: Umfangslinie
- 18: Wellenberg
- 19: Wellental
- 20: Gelenkskabel
- 21: Welle
- 22: Nocken
- 23: Verschweißung
- 24: Öffnung
- 25: Drahtgitter
- 26: gelenkige Verbindung
- 27: Längsachse

## Patentansprüche

1. Lenkspindel einer Lenksäule (1) für ein Kraftfahrzeug, welche zusätzlich zu einem an das Lenkrad (2) anschließenden Teil (3) mindestens einen weiteren Teil (5, 8) aufweist und deren Teile (3, 5, 8) über Kardangelenke (4, 26) miteinander verbunden sind und bei der in mindestens einem dieser ein oder mehreren weiteren Teile (5, 8) ein zur Deformation bei einem Crash vorgesehener Abschnitt (9) eingebaut ist, der als Wellrohr (11) ausgebildet ist, das mindestens zwei eng aneinander anliegende Schichten (14, 15) aufweist, wobei zumindest eine der Schichten (14, 15) mit einer Mehrzahl von im Bereich von Wellenbergen (18) angeordneten Öffnungen (16, 24) versehen ist und die Wellentäler (19) zumindest bis zu einem Viertel der Höhe (H) zwischen Wellental (19) und Wellenberg (18) frei von Öffnungen (16, 24) sind und wobei die äußere Schicht (14) geschlossen ausgebildet ist oder die äußere Schicht (15) mit einer Mehrzahl von im Bereich der Wellenberge (18) angeordneten Öffnungen (24) versehen ist und die Öffnungen (24) der äußeren Schicht (14) von der oder einer der inneren Schichten (15) zum Inneren des Wellrohres (11) hin geschlossen sind.

2. Lenkspindel nach Anspruch 1, **dadurch gekennzeichnet, daß** das Wellrohr (11) zumindest über den Teil seiner Längserstreckung, in welchem die Wellenberge (18) und Wellentäler (19) angeordnet sind, vorzugsweise über seine gesamte Länge, mehrschichtig ausgebildet ist.

3. Lenkspindel nach Anspruch 1 oder Anspruch 2, **dadurch gekennzeichnet, daß** in dem Teil der Längserstreckung des Wellrohres (11), in welchem dieses mit im Bereich von Wellenbergen (18) angeordneten Öffnungen (16, 24) versehen ist, das Wellrohr (11) mehrschichtig ausgebildet ist.

4. Lenkspindel nach einem der Ansprüche 1 bis 3, **dadurch gekennzeichnet, daß** zumindest ein Wellenberg (18), vorzugsweise mehrere Wellenberge (18), mit mehreren in Umfangsrichtung des Wellrohres (11) voneinander beabstandeten Öffnungen (16, 24) versehen ist/sind.

5. Lenkspindel nach einem der Ansprüche 1 bis 4, **dadurch gekennzeichnet, daß** zumindest der an das einem benachbarten Kardangelenk (6, 26) zugewandte Ende des Wellrohres (11) anschließende Wellenberg (18) für alle Schichten (14, 15) des Wellrohres (11) frei von Öffnungen (16, 24) ist, vorzugsweise mehrere an dieses Ende des Wellrohres (11) anschließende Wellenberge (18) frei von Öffnungen (16, 24) sind.

6. Lenkspindel nach einem der Ansprüche 1 bis 5, **dadurch gekennzeichnet, daß** die Schichten (14, 15) aus verschiedenen Materialien bestehen.

7. Lenkspindel nach Anspruch 6, **dadurch gekennzeichnet, daß** die äußere Schicht aus einem korrosionsbeständigen Material besteht, vorzugsweise Edelstahl, oder korrosionsfest beschichtet ist.

8. Lenkspindel nach Anspruch 6 oder Anspruch 7, **dadurch gekennzeichnet, daß** die äußere Schicht aus einem hitzebeständigen Material besteht.

9. Lenkspindel nach einem der Ansprüche 1 bis 8, **dadurch gekennzeichnet, daß** zwischen zwei Schichten (14, 15) ein Distanzmaterial, vorzugsweise Metallgeflecht oder Drahtgitter (25), zumindest über einen Teil der Länge des Wellrohres angeordnet ist.

10. Lenkspindel nach einem der Ansprüche 1 bis 9, **dadurch gekennzeichnet, daß** sich die Wandstärke von zumindest einer der Schichten (14, 15) über den Bereich der Wellenberge (18) und Wellentäler (19) von der dem benachbarten Kardangelenk (6, 26) zugewandten Seite zu der dem benachbarten Kardangelenk (6, 26) abgewandten Seite des Wellrohres (11) verringert.

11. Lenkspindel nach einem der Ansprüche 1 bis 10, **dadurch gekennzeichnet, daß** die Wandstärke von zumindest einer der Schichten (14, 15) zumindest im Bereich eines Wellenberges (18) geringer ist als im benachbarten Wellental (19), vorzugsweise um zumindest 20 %.

12. Lenkspindel nach einem der Ansprüche 1 bis 11, **dadurch gekennzeichnet, daß** sich die Höhe (H) der Wellung über den gewellten Bereich ändert, wobei der Abstand des Wellentals von der Längsachse (27) des Wellrohrs von einem oder mehreren dem benachbarten Kardangelenk (6, 26) benachbarten Wellentäler größer ist als derjenige von von diesem Kardangelenk (6, 26) weiter entfernt liegenden Wellentälern.

## Claims

1. A steering shaft of a steering column (1) for a motor vehicle, which steering shaft has, in addition to a part (3) connected to the steering wheel (2), at least one further part (5, 8), which parts (3, 5, 8) are connected to one another by universal joints (4, 26), and in which a portion (9), which is incorporated into at least one of these one or more further parts (5, 8) and is intended to deform in the event of an impact, is formed as a corrugated tube (11) which has at least two layers (14, 15) lying closely against one another, wherein at least one of the layers (14, 15) is provided with a plurality of openings (16, 24) arranged in the region of wave crests (18), and the wave troughs (19) are free of openings (16, 24) at least up to a quarter of the height (H) between a wave trough (19) and a wave crest (18), and wherein the outer layer (14) is formed with a closed structure or the outer layer (15) [*sic-* 14] is provided with a plurality of openings (24) arranged in the region of the wave crests (18), and the openings (24) in the outer layer (14) are closed by the or one of the inner layers (15) in the direction of the interior of the corrugated tube (11).

2. A steering shaft according to claim 1, **characterised in that** the corrugated tube (11) has a multi-layer formation at least over the part of its longitudinal extent in which the wave crests (18) and wave troughs (19) are arranged, preferably over its entire length.

3. A steering shaft according to claim 1 or claim 2, **characterised in that** the corrugated tube (11) has a multi-layer formation over the part of its longitudinal extent in which the corrugated tube (11) is provided with openings (16, 24) arranged in the region of wave crests (18).

4. A. steering shaft according to any one of claims 1 to 3, **characterised in that** at least one wave crest (18), preferably a plurality of wave crests (18), is/are provided with a plurality of openings (16, 24) which are spaced apart in the circumferential direction of the corrugated tube (11).

5. A steering shaft according to any one of claims 1 to 4, **characterised in that** at least the wave crest (18) adjacent to the end of the corrugated tube (11) facing an adjacent universal joint (6, 26) is free of openings (16, 24) for all layers (14, 15) of the corrugated tube (11), preferably a plurality of wave crests (18) adjacent to this end of the corrugated tube (11) are free of openings (16, 24).

6. A steering shaft according to any one of claims 1 to 5, **characterised in that** the layers (14, 15) comprise different materials.

7. A steering shaft according to claim 6, **characterised in that** the outer layer comprises a corrosion-resistant material, preferably stainless steel, or is provided with a corrosion-resistant coating.

8. A steering shaft according to claim 6 or claim 7, **characterised in that** the outer layer comprises a heat-resistant material.

9. A steering shaft according to any one of claims 1 to 8, **characterised in that** a spacing material, preferably metal braid or wire mesh (25), is arranged between two layers (14, 15) at least over part of the length of the corrugated tube.

10. A steering shaft according to any one of claims 1 to 9, **characterised in that** the wall thickness of at least one of the layers (14, 15) decreases over the region of the wave crests (18) and wave troughs (19) from the side of the corrugated tube (11) facing the adjacent universal joint (6, 26) to the side remote from the adjacent universal joint (6, 26).

11. A steering shaft according to any one of claims 1 to 10, **characterised in that** the wall thickness of at least one of the layers (14, 15) is lower at least in the region of a wave crest (18) than in the adjacent wave trough (19), preferably by at least 20%.

12. A steering shaft according to any one of claims 1 to 11, **characterised in that** the height (H) of the corrugation changes over the corrugated region, wherein the distance, from the longitudinal axis (27) of the corrugated tube, of one or more wave troughs adjacent to the adjacent universal joint (6, 26) is greater than that of wave troughs lying further away from this universal joint (6, 26).

## Revendications

1. Arbre de direction d'une colonne de direction (1) pour un véhicule automobile, qui en plus d'un composant (3) raccordé au volant (2) présente au moins un autre composant (5, 8), dont les composants (3, 5, 8) sont reliés les uns aux autres par des joints de Cardan (4, 26) et dont au moins un de ces un ou autres composants (5, 8), comporte un segment (9) prévu pour se déformer lors d'une collision et ayant et a la forme d'un tube ondulé (11) qui présente au moins deux couches (14, 15) accolées l'une à l'autre, au moins une des couches (14, 15) étant munie de plusieurs ouvertures (16, 24) disposées dans la zone de sommets (18) alors que les creux (19) sont exempts d'ouvertures (16, 24) au moins jusqu'à un quart de la hauteur (H) entre un creux (19) et un sommet (18), et la couche extérieure (14) étant fermée, ou la couche extérieure (15) étant munie de plusieurs ouvertures (24) disposées dans la zone des sommets (18) alors que les ouvertures (24) de la couche extérieure (14) sont fermées vers l'intérieur du tube ondulé (11) par la ou une des couches intérieures (15).

2. Arbre de direction selon la revendication 1,
**caractérisé en ce que**
le tube ondulé (11) est formé par plusieurs couches, au moins sur la partie de son étendue longitudinale dans laquelle sont disposés les sommets (18) et les creux (19), de préférence sur toute sa longueur.

3. Arbre de direction selon la revendication 1 ou 2,
**caractérisé en ce que**
dans la partie de l'étendue longitudinale du tube ondulé (11) dans laquelle celui-ci est muni d'ouvertures (16, 24) disposées dans la zone de sommets (18), le tube ondulé (11) est formé par plusieurs couches.

4. Arbre de direction selon l'une quelconque des revendications 1 à 3,
**caractérisé en ce qu'**
au moins un sommet (18), de préférence plusieurs sommets (18), est/sont muni(s) de plusieurs ouvertures (16, 24) écartées les unes des autres dans la direction périphérique du tube ondulé (11).

5. Arbre de direction selon l'une quelconque des revendications 1 à 4,
**caractérisé en ce qu'**
au moins le sommet (18) raccordé à une extrémité du tube ondulé (11) tournée vers un joint de Cardan (6, 26) voisin est exempt d'ouvertures (16, 24) pour toutes les couches (14, 15) du tube ondulé (11), de préférence plusieurs sommets (18) raccordés à cette extrémité du tube ondulé (11) sont exempts d'ouvertures (16, 24).

6. Arbre de direction selon l'une quelconque des revendications 1 à 5,
**caractérisé en ce que**
les couches (14, 15) sont réalisées à partir de matériaux différents.

7. Arbre de direction selon la revendication 6,
**caractérisé en ce que**
la couche extérieure est réalisée à partir d'un matériau résistant à la corrosion, de préférence en acier noble, ou est revêtue de manière à résister à la corrosion.

8. Arbre de direction selon la revendication 6 ou 7,
**caractérisé en ce que**
la couche extérieure est réalisée à partir d'un matériau résistant à la chaleur.

9. Arbre de direction selon l'une quelconque des revendications 1 à 8,
**caractérisé en ce qu'**
entre deux couches (14, 15) un matériau de distance, de préférence un treillis métallique ou une grille en fils de fer (25), est disposé au moins sur une partie de la longueur du tube ondulé.

10. Arbre de direction selon l'une quelconque des revendications 1 à 9,
**caractérisé en ce que**
l'épaisseur de paroi d'au moins l'une des couches (14, 15) sur la zone des sommets (18) et des creux (19) diminue depuis le côté tourné vers le joint de Cardan (6, 26) vers le côté du tube ondulé (11) à l'opposé du joint de Cardan (6, 26) voisin.

11. Arbre de direction selon l'une quelconque des revendications 1 à 10,
**caractérisé en ce que**
l'épaisseur de paroi d'au moins l'une des couches (14, 15), au moins dans la zone d'un sommet (18), est plus faible que dans le creux (19) voisin, de préférence d'au moins 20 %.

12. Arbre de direction selon l'une quelconque des revendications 1 à 11,
**caractérisé en ce que**
la hauteur (H) de l'ondulation varie sur la zone ondulée, la distance du creux par rapport à l'axe longitudinal (27) du tube ondulé d'un ou de plusieurs creux voisins du joint de Cardan (6, 26) voisin étant supérieure à celle de creux plus éloignés de cette articulation de Cardan (6, 26).
